(19) **Europäisches Patentamt / European Patent Office / Office européen des brevets**

(11) **EP 1 407 575 B1**

(12) **FASCICULE DE BREVET EUROPEEN**

(45) Date de publication et mention
de la délivrance du brevet:
**27.06.2007 Bulletin 2007/26**

(21) Numéro de dépôt: **02767544.6**

(22) Date de dépôt: **02.07.2002**

(51) Int Cl.:
*H04L 9/32* (2006.01)

(86) Numéro de dépôt international:
**PCT/FR2002/002302**

(87) Numéro de publication internationale:
**WO 2003/009522 (30.01.2003 Gazette 2003/05)**

(54) **PROCEDE POUR EFFECTUER UNE TACHE CRYPTOGRAPHIQUE AU MOYEN D'UNE CLE PUBLIQUE**

VERFAHREN ZUR AUSFÜHRUNG EINER KRYPTOGRAPHISCHEN BERECHNUNG UNTER VERWENDUNG EINES ÖFFENTLICHEN SCHLÜSSELS

PROCEDE POUR EFFECTUER UNE TACHE CRYPTOGRAPHIQUE AU MOYEN D'UNE CLE PUBLIQUE.

(84) Etats contractants désignés:
**AT BE BG CH CY CZ DE DK EE ES FI FR GB GR IE IT LI LU MC NL PT SE SK TR**

(30) Priorité: **18.07.2001 FR 0109611**

(43) Date de publication de la demande:
**14.04.2004 Bulletin 2004/16**

(73) Titulaire: **FRANCE TELECOM**
**75015 Paris (FR)**

(72) Inventeurs:
• **GIRAULT, Marc**
**F-14000 Caen (FR)**

• **PAILLES, Jean-Claude**
**F-14610 Epron (FR)**

(74) Mandataire: **Verdure, Stéphane**
**Cabinet Plasseraud**
**52 rue de la Victoire**
**75440 Paris Cedex 09 (FR)**

(56) Documents cités:
• **KAWAMURA S-I ET AL: "FAST SERVER-AIDED SECRET COMPUTATION PROTOCOLS FOR MODULAR EXPONENTIATION" IEEE JOURNAL ON SELECTED AREAS IN COMMUNICATIONS, IEEE INC. NEW YORK, US, vol. 11, no. 5, 1 June 1993 (1993-06-01), pages 778-784, XP000399846 ISSN: 0733-8716**

**EP 1 407 575 B1**

**Description**

Le domaine de l'invention est celui de la cryptographie. La cryptographie trouve application pour sécuriser des transactions entre deux ou plusieurs entités. Parmi ces applications, on trouve des procédés de chiffrement de messages, d'identification, de signature électronique ou encore d'authentification de message. Un procédé de chiffrement consiste essentiellement à chiffrer un message de façon à ce que seul le destinataire puisse le déchiffrer pour le lire. Un procédé d'identification consiste essentiellement à vérifier l'identité d'une entité émettrice. Un procédé de signature électronique consiste essentiellement à vérifier qu'un message est tel qu'il a été signé par une entité qui l'a généré. Un procédé d'authentification de message consiste essentiellement à vérifier qu'un message reçu a été effectivement émis par une entité émettrice d'identité connue.

Plus précisément, le domaine de l'invention est celui de la cryptographie dite à clé publique. On connaît par exemple des procédés cryptographiques dans lesquels une première entité, souvent nommée prouveur, effectue secrètement des premières opérations numériques au moyen d'une clé privée à laquelle est associée une clé publique. Un ou plusieurs résultats de ces opérations, sont transmis à une deuxième entité, souvent nommée vérificateur. Le vérificateur effectue alors au moyen de la clé publique, des deuxièmes opérations qui vérifient que les premières opérations ont effectivement été exécutées au moyen de la clé privée. Ces procédés sont utiles pour signer ou authentifier des messages ou encore pour authentifier la première entité, on parle dans ce dernier cas d'identification. Réciproquement, on connaît aussi des procédés cryptographiques dans lesquels la deuxième entité commence par chiffrer un message au moyen de la clé publique. Seule la première entité qui détient la clé privée associée, peut alors déchiffrer le message.

Dans les procédés cryptographiques dits à connaissance nulle ou sans apport de connaissance (zero knowledge), une vérification se déroule suivant un protocole qui, de façon prouvée et sous des hypothèses reconnues parfaitement raisonnables par la communauté scientifique, ne révèle rien sur la clé privée.

Parmi des procédés connus sur lesquels l'invention trouve application, on peut citer ceux basés sur l'algorithme RSA (Rivest, Shamir, Adleman) ou sur le problème dit du logarithme discret.

La cryptographie à clé publique est particulièrement utile, par exemple pour le paiement électronique, par carte bancaire ou par porte-monnaie électronique. Dans le cas du paiement de proximité, le terminal de paiement doit à la fois se trouver dans un lieu public, ce qui incite à utiliser des procédés de cryptographie à clé publique, et être bon marché, ce qui incite à utiliser des puces aux capacités de calcul limitées. Dans le cas du paiement en ligne, le serveur du marchand ou le serveur de paiement (ou encore le serveur d'intermédiation) est susceptible à certains moments d'être amené à effectuer un grand nombre de vérifications de manière simultanée. Dans les deux cas, il est souhaitable de trouver une solution permettant d'alléger la tâche de vérification, c'est à dire la tâche cryptographique qui utilise la clé publique.

De façon connue, la cryptographie à clé publique repose sur la difficulté selon la théorie des nombres entiers à retrouver une fonction inverse dans une manipulation de nombres entiers très grands. L'inconvénient est que, pour garantir un degré de sécurité suffisant, l'utilisation de la clé publique nécessite généralement une quantité considérable de multiplications et de divisions euclidiennes par de grands nombres, lesquelles opérations consomment des ressources de calcul en quantité correspondante.

On peut envisager de moduler le niveau de vérification en fonction de différents critères d'appréciation tels qu'une évaluation de la charge de travail plus ou moins élevée du vérificateur. Le problème de cette solution est que la conviction susceptible d'être accordée à cette vérification, est modulée dans les mêmes proportions. Cependant, certaines applications requièrent de pouvoir accorder une conviction forte à la vérification.

Plus récemment, le document KAWAMURA S.I. et al. : « Fast served-aided secret computation protocols for modular exponentiation » IEEE Journal on selected areas in communications, IEEE INC. New York, U.S., vol. 11, n°5, 1 juin 1993 (1993-06-01) pages 778-784, a divulgué un procédé pour effectuer une tâche cryptographique au moyen d'une clé privée détenue par un client et une clé publique détenue par un serveur. Le serveur disposant de moyens de calcul plus performants que ceux du client, assiste ces derniers dans sa tâche d'exponentiation, en permettant au client de garder le secret de sa clé privée.

Ce mode opératoire ne permet pas la mise en oeuvre d'une véritable délégation de tâche, si ce n'est une mise à disposition d'une ressource de calcul au bénéfice de l'équipement le moins performant.

La présente invention a pour objet de remédier aux inconvénients précités de la technique antérieure.

Un premier objet de l'invention est d'alléger la tâche du vérificateur dans les protocoles de vérification en réduisant la quantité de calculs à exécuter, sans pour autant diminuer le niveau de conviction de ce dernier quant à l'authenticité de l'entité émettrice et ou des données émises par cette entité.

Un deuxième objet de l'invention est de permettre d'effectuer des transactions en temps réduit avec des microcircuits aux capacités de calcul limitées.

Pour cela, l'invention concerne un procédé pour effectuer une tâche cryptographique au moyen d'une clé publique sur au moins une donnée numérique échangée entre une première entité dotée d'une clé privée et une deuxième

2

entité. Le procédé est caractérisé en ce que ladite tâche cryptographique est décomposée en au moins deux étapes:

- une première étape exécutée par une entité intermédiaire qui soumet ladite donnée à un traitement numérique ouvert au moyen de tout ou partie de ladite clé publique pour obtenir une image partielle de ladite donnée;
- une deuxième étape exécutée par la deuxième entité qui soumet ladite image partielle à un traitement numérique public au moyen de tout ou partie de ladite clé publique de façon à compléter ladite tâche cryptographique sur ladite donnée.

Ce procédé permet au vérificateur constitué par la deuxième entité, de réduire sa propre charge de travail en en déléguant une partie à l'entité intermédiaire qui, soit est dotée de moyens de calcul plus importants que ceux dont dispose le vérificateur, soit participe à moins de transactions que le vérificateur.

Le traitement numérique est ouvert en ce qu'il est librement accessible. L'entité intermédiaire n'a pas besoin d'être une entité de confiance du point de vue du vérificateur car celle-ci n'intervient que partiellement sur la tâche cryptographique au moyen de la clé publique et conduirait à un échec de la tâche cryptographique si l'entité intermédiaire venait à corrompre l'image partielle, la deuxième entité étant celle qui termine la tâche cryptographique. Lorsque la tâche cryptographique est une vérification, elle se termine par oui ou par non selon que la vérification est confirmée ou infirmée. Dans ce cas, l'entité intermédiaire ne peut pas transformer un non en oui. Les échanges avec l'entité intermédiaire peuvent être faits dans un monde ouvert car la première étape est exécutée au moyen de tout ou partie de la clé publique et la donnée soumise au traitement numérique ouvert est aussi soumise au traitement numérique secret par la première entité.

Avantageusement, le procédé est caractérisé en ce que l'entité intermédiaire réside dans un équipement physique distinct d'un équipement physique dans lequel réside la deuxième entité.

La deuxième entité peut alors retransmettre la donnée reçue de la première entité, vers un équipement informatique puissant quelconque qui héberge l'entité intermédiaire. L'équipement informatique renvoyant l'image partielle à la deuxième entité. Sur un réseau ouvert, l'entité intermédiaire est hébergée dans un serveur délégué (proxy server) qui reçoit directement la donnée de la première entité.

Avantageusement encore lorsque la deuxième entité peut être amenée à effectuer plusieurs tâches cryptographiques pour plusieurs premières entités, le procédé est caractérisé en ce que l'entité intermédiaire réside dans un équipement physique dans lequel réside la première entité.

Lé fait de transférer une partie de la charge de travail du vérificateur vers le prouveur sans altération des propriétés de sécurité, revient à spécifier une variante particulière du protocole initial.

Plus particulièrement, le procédé est caractérisé en ce que ladite tâche cryptographique consiste en une identification de la première entité par la deuxième entité, ladite donnée numérique étant un premier nombre entier qui, soumis à un traitement numérique secret dans la première entité donne un deuxième nombre entier qui est émis et au moyen de la clé privée et d'un troisième nombre entier reçu de la deuxième entité ayant reçu le deuxième nombre entier, donne un quatrième nombre entier et en ce que:

- le traitement numérique ouvert consiste essentiellement à transformer ledit quatrième nombre entier en un cinquième nombre entier au moyen de la première partie de clé publique;
- le traitement numérique public consiste essentiellement à transformer ledit cinquième nombre entier au moyen de la deuxième partie de ladite clé publique pour obtenir une valeur qui conclut à une identification de la première entité lorsque ladite valeur est égale au dit deuxième nombre entier.

Différemment, le procédé est plus particulièrement caractérisé en ce que ladite tâche cryptographique consiste en une vérification de signature électronique, ladite donnée numérique étant un nombre qui, soumis à un traitement numérique secret dans la première entité au moyen de la clé privée, donne une signature et en ce que:

- le traitement numérique ouvert consiste essentiellement à transformer ladite signature en une image partielle de signature au moyen d'une première partie de ladite clé publique;
- le traitement numérique public consiste essentiellement à transformer ladite image partielle de signature au moyen d'une deuxième partie de ladite clé publique pour obtenir une valeur qui conclut à une signature valide lorsque ladite valeur est égale au dit nombre.

Différemment encore, le procédé est plus particulièrement caractérisé en ce que ladite tâche cryptographique consiste en une authentification de message par la deuxième entité, d'un message émis par la première entité, ladite donnée numérique étant un premier nombre entier qui, soumis au traitement numérique secret dans la première entité donne un deuxième nombre entier qui est soumis à une fonction de hachage en combinaison avec le message pour obtenir un troisième nombre entier, le message et le troisième nombre entier étant émis, le premier nombre entier soumis au traitement numérique secret dans la première entité au moyen de la clé privée et d'un quatrième nombre entier reçu de la deuxième entité ayant reçu le troisième nombre entier, donnant un cinquième nombre entier et en ce que:

- le traitement numérique ouvert consiste essentiellement à transformer ledit cinquième nombre entier en un sixième nombre entier au moyen de tout ou partie de la clé publique;
- le traitement numérique public consiste essentiellement à transformer ledit sixième nombre entier au moyen de tout ou partie de ladite clé publique pour obtenir une première valeur qui, soumise à la fonction de hachage en combinaison avec le message, donne une deuxième valeur qui conclue à une authentification de message valable lorsque ladite valeur est égale au dit troisième nombre entier.

D'autres détails et avantages de l'invention seront mieux compris à partir d'exemples de mise en oeuvre dont la description suit en référence aux dessins annexés dans lesquels:

- la figure 1 montre un exemple de mise en oeuvre de l'invention dans un procédé de signature électronique;
- les figures 2 à 4 montrent des exemples de mise en oeuvre de l'invention dans un procédé d'identification;
- la figure 5 montre un exemple de mise en oeuvre de l'invention dans un procédé d'authenfication.

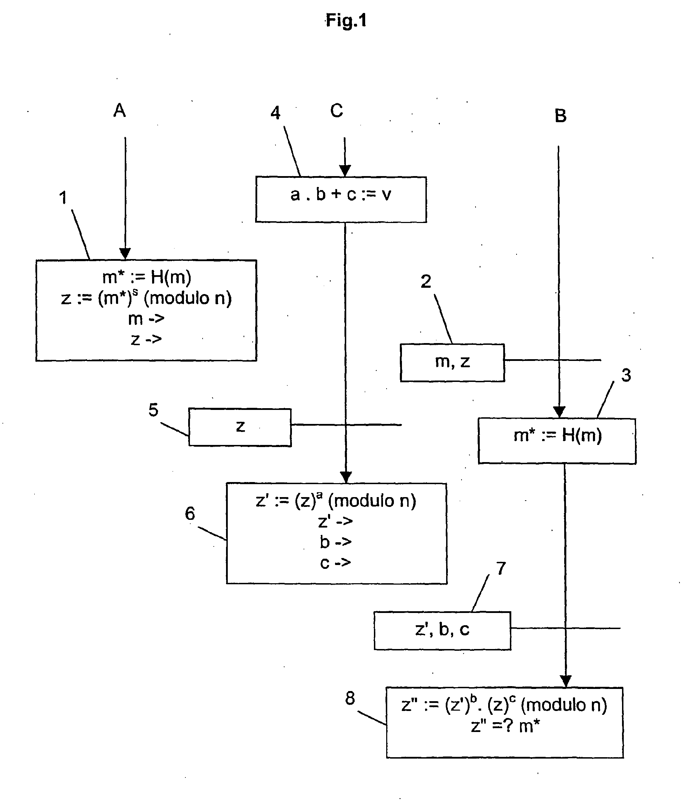

La figure 1 présente un premier exemple de mise en oeuvre de l'invention dans un procédé de signature électronique. Le procédé de signature électronique utilise par exemple l'algorithme de signature RSA décrit par Rivest, Shamir et Adleman ("A method for obtaining digital signatures and public-key cryptosystems", CACM, Vol.21, n°2, Feb. 1978, pp. 120-126). De façon connue, l'algorithme RSA repose sur l'utilisation d'une clé privée s et d'une clé publique formée d'un couple (n, v) où n est généralement le produit de deux nombres premiers p et q tenus secrets et v est un nombre premier par rapport au produit (p-1)(q-1).

Sous forme numérique, un message m constitué d'une suite binaire est considéré à ce titre comme un nombre entier. Dans une étape 1 pour signer électroniquement un message m, une première entité A applique généralement une fonction de hachage H au message m puis un formatage du résultat de la fonction de hachage, de façon à obtenir un nombre entier m* inférieur à n. Le formatage consiste généralement à ajouter des bits non tous nuls au mot binaire qui résulte de la fonction de hachage, de façon à ce que le nombre entier soit codé avec une quantité de bits, égale à celle qui code le nombre n.

L'entité A génère ensuite une signature électronique z égale à une puissance s modulo n du nombre entier m*. La signature électronique z est donc un nombre entier égal au reste de la division euclidienne du nombre entier m* élevé à la puissance s par le nombre n. Le nombre n étant très grand et seule l'entité A connaissant la valeur s, il est pratiquement impossible à une autre entité que A de générer un nombre entier z qui vérifie la formule:

$$z = (m^*)^s \ (modulo \ n)$$

L'étape 1 se termine par une émission du message m et de sa signature électronique z.

Une réception du message m et de sa signature z par une deuxième entité B, valide une transition 2 qui active une étape 3. Dans l'étape 3, l'entité B applique la fonction de hachage H au message m pour réobtenir localement le nombre m*.

Selon l'invention, une étape 4 décompose la valeur v de clé publique sous une forme:

$$a \cdot b + c = v$$

où les nombres entiers a et b sont strictement supérieurs à 1. Le nombre entier c est par exemple le reste, s'il existe, d'une division euclidienne de v par b.

Une réception de la signature z par une entité intermédiaire C, valide une transition 5 qui active une étape 6. Dans l'étape 6, l'entité C génère une valeur partielle de signature z' égale à une puissance a de la signature z modulo n. L'étape 6 se termine par l'émission de la valeur partielle de signature z' et si besoin par l'émission des valeurs de nombres entiers b et c.

Une réception de la valeur partielle de signature z' et des valeurs b et c par l'entité B, valide une transition 7 qui active une étape 8. Dans l'étape 8, l'entité B génère un nombre entier z" égal au produit modulo n de la valeur partielle de signature z' élevée à la puissance b par la valeur de signature z élevée à la puissance c. On utilise ici la convention habituelle qui consiste à définir comme étant égale à l'unité, une puissance d'exposant nul.

Ensuite, l'entité B teste dans l'étape 8 si le nombre entier z" est égal au nombre entier m*. Si c'est le cas, le message m reçu est bien celui signé par l'entité A.

En effet, sachant que le reste d'une division par n d'un produit de deux restes de division par n de deux nombres entiers, est égal au reste de la division par n du produit de ces deux nombres entiers, on a:

$$[(z')^b.(z)^c] \text{ (modulo n)} = [(z')^b (\text{modulo n}).(z)^c (\text{modulo n})] \text{ (modulo n)}$$
$$= [(z)^{a.b} (\text{modulo n}).(z)^c (\text{modulo n})] \text{ (modulo n)}$$
$$= [(z)^{a.b}.(z)^c] \text{ (modulo n)}$$
$$= [(z)^{a.b+c}] \text{ (modulo n)}$$

Et donc:

$$z" = (z)^v \text{ (modulo n)}$$

L'entité intermédiaire C n'a pas besoin d'être une entité de confiance car la sécurité a peu ou pas de chance d'être altérée par l'étape 6. En effet, il est pratiquement impossible de trouver pour une valeur de m*, un nombre z' tel que son élévation à la puissance b permet de calculer une valeur de z" égale à m* autrement qu'en élevant la valeur de signature z à la puissance a modulo n.

Dans l'exemple de mise en oeuvre décrit en référence à la figure 1, la tâche cryptographique en charge de l'entité B est une vérification du fait que le message m reçu a effectivement été signé par l'entité A. La vérification est positive si l'élévation à la puissance v de la signature z modulo n, est égale au nombre m*. Le temps de calcul d'une élévation à la puissance v, est sensiblement proportionnel à la taille de v en bits. La tâche cryptographique et plus particulièrement le calcul d'élévation à la puissance v est ici répartie dans les étapes 6 et 8.

L'entité intermédiaire C exécute en étape 6, une partie du calcul d'élévation à la puissance v de la signature z. L'entité B exécute en étape 8, la partie complémentaire du calcul d'élévation à la puissance v de la signature z. Le temps de calcul exécuté par l'entité B est sensiblement proportionnel à b+c. Ainsi, la puissance de calcul nécessaire à l'entité B, est sensiblement réduite par division d'un facteur a. La puissance de calcul nécessaire à l'entité B est encore réduite si le nombre c est nul. C'est le cas s'il est possible de décomposer le nombre v en un produit de deux nombres entiers a et b.

L'entité C représentée sur la figure 1 exécute l'étape 4 puis l'étape 6 après validation de la transition 5. L'étape 4 n'a pas besoin d'être exécutée à chaque émission d'un message m avec sa signature z. Pour une valeur de v donnée, les nombres a, b et c si c est non nul, peuvent être calculés une fois pour toutes, éventuellement indépendamment des entités A, B et C. L'entité C a alors simplement besoin d'avoir connaissance du nombre a. L'entité B a alors simplement besoin d'avoir connaissance du nombre b et du nombre c si celui-ci est non nul. Dans ce cas, les nombres b et c ne sont pas émis en étape 6 et la transition 7 est validée par la simple réception de la valeur partielle de signature z'.

Avantageusement, l'entité C réside dans un équipement physique distinct de celui dans lequel réside l'entité B. Ainsi, l'équipement physique dans lequel réside l'entité B peut disposer de moyens de calcul réduits en comparaison de ceux dont il devrait disposer si l'entité B exécutait l'intégralité de la tâche cryptographique.

L'entité C peut résider dans un équipement physique distinct de celui dans lequel réside l'entité A ou dans le même équipement physique que l'entité A.

Dans le cas où les entités A et C résident dans un même équipement physique, les valeurs des nombres a, b et éventuellement c, sont mémorisées dans cet équipement physique. Si c est non nul, l'équipement physique dans lequel résident les entités A et C, émet le message m, la signature z, la signature partielle z' et les nombres b et c. Si c est nul, l'équipement physique dans lequel résident les entités A et C, émet le message m, la signature partielle z' et le nombre b.

L'exemple de mise en oeuvre qui vient d'être décrit en référence à la figure 1 s'applique à la vérification de tout message signé par une entité quelconque.

Il est encore avantageux d'accélérer la vérification d'un certificat de clé publique (n, v) d'un prouveur. Un certificat est une signature électronique calculée par une autorité de certification, portant sur l'identité et sur la clé publique du prouveur, reliant ainsi l'une et l'autre d'une manière qui puisse être vérifiée par n'importe quelle autre entité, dès lors que cette dernière détient une clé publique de vérification de l'autorité de certification.

Si ce certificat est aussi calculé avec l'algorithme RSA, la décomposition expliquée précédemment d'une tâche cryptographique pour vérifier le certificat, permet une accélération des calculs de vérification dans l'entité B qui reçoit le certificat. Plus généralement, si le certificat est calculé avec un schéma de signature auquel l'invention s'applique, il est intéressant d'appliquer l'invention à la vérification du certificat par un vérificateur qui utilise ce certificat pour vérifier une signature électronique.

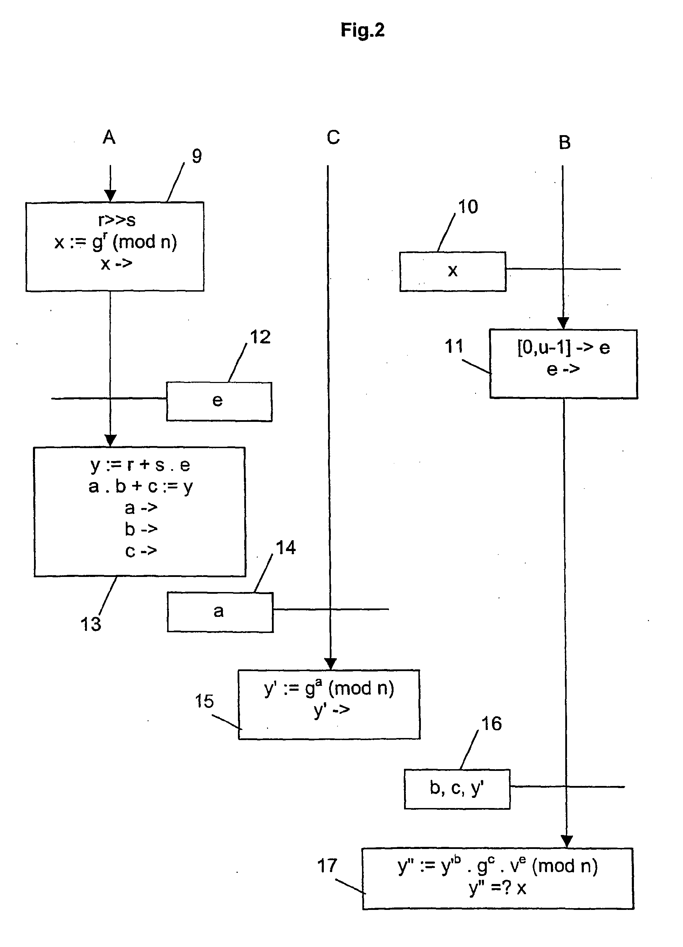

La figure 2 présente un deuxième exemple de mise en oeuvre de l'invention dans un procédé d'identification. Le procédé d'identification utilise par exemple un protocole à connaissance nulle basé sur le logarithme discret, tel que ceux décrits dans les demandes de brevet FR2716058 et FR2752122 publiées respectivement le 11 août 1995 et le 6 février 1998. Le protocole à logarithme discret repose sur l'utilisation d'une clé privée constituée d'un nombre entier s et d'une clé publique constituée d'un triplet (n, v, g) de nombres entiers. La clé privée s est détenue secrètement par une entité A qui doit prouver son identité. La clé publique (n, v, g) est transmise à toute entité B qui doit vérifier l'identité de l'entité A. La transmission de clé publique est effectuée par exemple au moyen d'un certificat qui peut être avantageusement préalablement vérifié au moyen d'un procédé conforme à l'invention. Dans la clé publique, le nombre entier n, appelé module, est un produit de nombres premiers suffisamment grand pour en rendre une factorisation pratiquement impossible, compte tenu des algorithmes de factorisation existants. Le nombre entier g, appelé base, est tel que l'ensemble constitué des nombres $g^x$ modulo n, lorsque x parcourt l'intervalle [0, n-1], est un sous-ensemble de taille conséquente de cet intervalle. Le nombre entier v est un paramètre de sécurité qui vérifie la relation:

$$v = g^{-s} \text{ (modulo n)}$$

telle que la connaissance de v, g et n ne permet pratiquement pas de retrouver la valeur de s.

Pour s'identifier, l'entité A active une étape 9. Dans l'étape 9, l'entité A génère un nombre aléatoire ou pseudo-aléatoire r très supérieur au nombre s. Le nombre entier r est gardé secret par l'entité A. Ensuite, l'entité A génère un nombre entier x égal à une puissance r de g modulo n. L'étape 9 se termine par une émission du nombre entier x.

Une réception du nombre x par l'entité B, valide une transition 10 qui active une étape 11.

Dans l'étape 11, l'entité B génère un nombre entier e à partir d'un intervalle [0, u-1] puis émet le nombre e.

Une réception du nombre e par l'entité A, valide une transition 12 qui active une étape 13.

Dans l'étape 13, l'entité A génère un nombre y égal à une somme du nombre r et d'un produit du nombre s par le nombre e. Ensuite, l'entité A décompose le nombre y sous forme d'une combinaison linéaire de nombres entiers différents des nombres r, s et e. Par exemple, l'entité A effectue une division du nombre y par un nombre entier b strictement supérieur à 1. Le quotient a et le reste c permettent d'obtenir la combinaison linéaire:

$$y = a.b+c$$

L'entité A émet alors les nombres entiers a, b, c.

La division est par exemple une division euclidienne. Le nombre b est toujours choisi de façon à ce que le quotient que constitue le nombre a, soit strictement supérieur à 1. La division du nombre y, n'est pas nécessairement faite dans l'entité A, elle peut l'être aussi ailleurs tel que par exemple dans l'entité C ou dans l'entité B.

Une réception du nombre a par une entité intermédiaire C, valide une transition 14 qui active une étape 15.

Dans l'étape 15, l'entité C génère un nombre entier y', image partielle du nombre y en élevant la base g à une puissance modulo le module n et dont l'exposant est le nombre entier a. L'entité C émet alors le nombre entier y'.

Une réception du nombre entier y' et des nombres entiers b et c par l'entité B, valide une transition 16 qui active une étape 17.

Dans l'étape 17, l'entité B élève le nombre y' à une puissance d'exposant b, la base g à une puissance d'exposant c, le paramètre de sécurité v à une puissance d'exposant e et fait le produit modulo n des trois puissances ainsi obtenues pour générer un nombre entier y''. On peut utiliser le fait qu'un produit modulo n de termes, est égal au produit modulo n de ces termes considérés chacun modulo n.

L'entité B vérifie ensuite si le nombre y'' est égal au nombre x précédemment reçu. Si l'égalité est vraie, l'entité B identifie avec certitude l'entité A comme étant celle qui a émis le nombre x.

En effet, si l'entité A est celle qui a émis le nombre x:

$$y'' = y'^{b}.g^{c}.v^{e} \text{ (modulo n)}$$

$$y'' = g^{a.b}.g^{c}.v^{e} \text{ (modulo n)}$$

$$y'' = g^{a.b+c}.v^e \text{ (modulo } n)$$

$$y'' = g^{r+s.e}.v^e \text{ (modulo } n)$$

$$y'' = g^r.g^{s.e}.v^e \text{ (modulo } n)$$

$$y'' = g^r.(g^s.v)^e \text{ (modulo } n)$$

Or $(g^s.v)$ (modulo $n$) = 1 donc:

$$y'' = g^r \text{ (modulo } n) = x$$

La sécurité n'est pas altérée par le fait que l'étape 15 ait été effectuée par une entité extérieure C qui n'est pas nécessairement une entité de confiance car il est impossible en pratique de trouver à partir de $n$, $v$, $g$ et éventuellement $c$, un nombre $y'$ tel que $y'^b.g^c.v^e$ (modulo $n$) soit égal à $x$, sans connaissance de la factorisation de $n$ à laquelle correspond la clé privée $s$ qui est détenue secrètement par l'entité A.

Considérant une quantité canonique $k$ de bits pour coder un nombre entier, c'est à dire la quantité minimale de bits nécessaires pour décomposer le nombre entier dans une base binaire, les méthodes usuelles connue d'élévation à une puissance modulo $n$, dont l'exposant est ce nombre entier, effectuent une quantité de multiplications modulo $n$, proportionnelle à la quantité $k$ de bits.

Sans l'entité intermédiaire C, l'entité B aurait reçu le nombre $y$ égal à $r+s.e$ pour calculer $y''$ par la formule:

$$y'' = g^y.v^e \text{ (modulo } n)$$

La quantité de multiplications modulo $n$, effectuée par l'entité B pour élever $g$ à la puissance $y$, aurait été proportionnelle à la quantité de bits nécessaire pour coder sous forme canonique le nombre $r+s.e$, c'est à dire $a.b+c$.

En effectuant une quantité de multiplications modulo $n$ dans l'entité C, proportionnelle à la quantité de bits nécessaire pour coder sous forme canonique le nombre $a$, l'entité B ne fait qu'une quantité de multiplications modulo $n$, proportionnelle à la quantité de bits nécessaire pour coder sous forme canonique le nombre $b$, à laquelle-s'ajoute éventuellement une quantité de multiplications modulo $n$, proportionnelle à la quantité de bits nécessaire pour coder sous forme canonique le nombre $c$. L'économie de multiplications modulo $n$ ainsi réalisée dans l'entité B permet d'accélérer la vérification d'identité dans l'entité B.

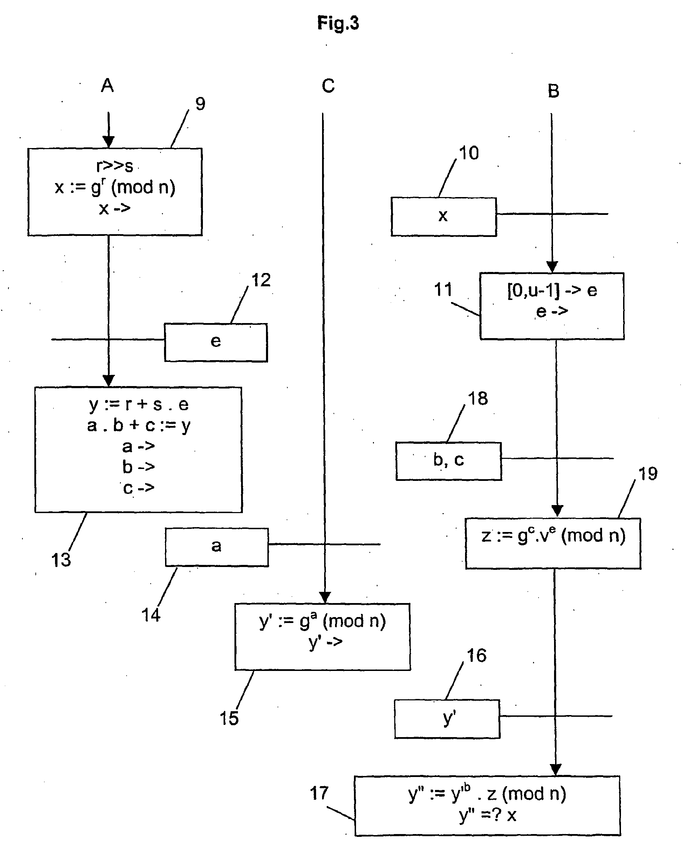

La figure 3 montre une variante du procédé décrit en référence à la figure 2 pour accélérer encore l'exécution de la tâche cryptographique dans l'entité B.

Une réception des nombres $b$ et $c$ par l'entité B, valide une transition 18 qui active une étape 19.

Dans l'étape 19, l'entité B génère un nombre $z$ égal au produit modulo $n$, de la puissance de la base $g$ avec pour exposant le nombre $c$ et de la puissance du paramètre de sécurité $v$ avec pour exposant le nombre $e$.

La transition 16 est alors validée par la réception du nombre $y'$. Dans l'étape 17, l'entité B génère le nombre $y''$ égal au produit modulo $n$, du nombre $z$ par la puissance du nombre $y'$ avec pour exposant le nombre $b$.

L'exécution de l'étape 19 avant de recevoir le nombre $y'$, permet une parallèlisation d'exécution des étapes 15 et 19.

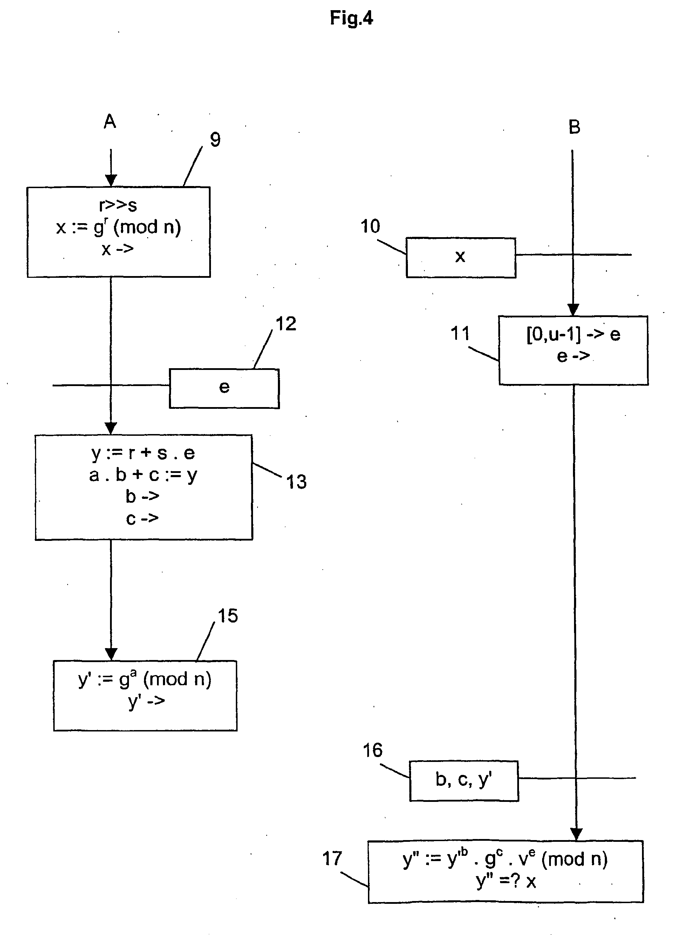

La figure 4 montre une autre variante du procédé décrit en référence à la figuré 2 particulièrement utile lorsque l'entité B doit identifier une grande quantité d'entités A. L'entité C réside alors dans un même équipement physique que l'entité A. Ceci revient à faire exécuter par l'entité A, l'étape 15 directement à la suite de l'étape 13. En étape 13, l'entité A émet vers l'extérieur uniquement les nombres $b$ et $c$. En étape 15, l'entité A émet directement le nombre $y'$.

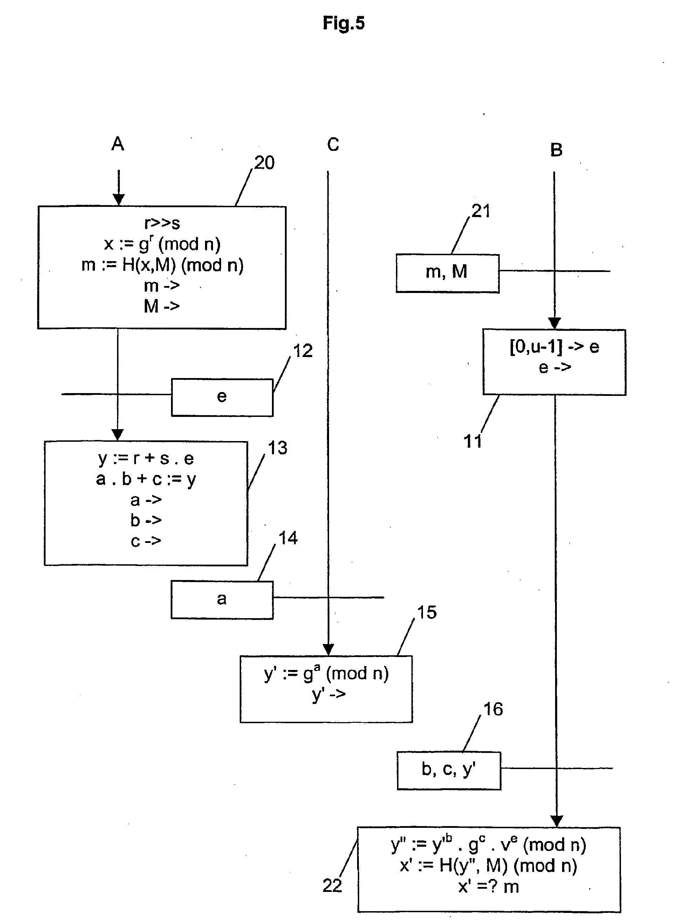

La figure 5 présente un troisième exemple de mise en oeuvre de l'invention dans un procédé d'authentification de message. Le procédé d'authentification de message utilise par exemple un protocole semblable à celui utilisé pour le procédé décrit en référence aux figures 2 à 4.

Pour émettre un message M vers l'entité B de sorte que l'entité B puisse vérifier que le message M est un message authentique émis par l'entité A, l'entité A active une étape 20.

Dans l'étape 20, l'entité A génère un nombre aléatoire ou pseudo-aléatoire r très supérieur au nombre s. Le nombre entier r est gardé secret par l'entité A. L'entité A génère un nombre entier x égal à une puissance r de g modulo n. L'entité A génère un nombre m égal à une fonction H de hachage du nombre entier x et du message M, de façon à obtenir un nombre entier m. L'entité A émet ensuite le nombre entier m et le message M.

Une réception par l'entité B du nombre m et du message M, valide une transition 21 qui active l'étape 11. Le procédé comprend la suite des étapes et transitions 11 à 16 qui se déroulent et s'exécutent de façon identique à l'une de celles décrites en référence aux figures 2 à 4.

Une validation de la transition 16 active alors une étape 22. dans l'étape 22, l'entité B génère le nombre entier y" de façon identique à l'étape 17 décrite en référence à l'une des figures 2 à 4. L'entité B génère ensuite un nombre x' égal à la fonction H de hachage du nombre y" et du message M puis compare le nombre x' au nombre m. L'égalité du nombre x' et du nombre m assure l'entité B que c'est bien l'entité A qui a émis-le message M car seule l'entité A a pu générer un nombre x égal à y" de sorte que H(x, M) soit égal à H(y", M).

En résumé, le procédé permet de diminuer la charge de calcul du vérificateur constitué par l'entité B, dans une transaction électronique sécurisée incluant un mécanisme d'authentification de message, d'identification ou de signature électronique.

Il consiste à déléguer une partie de ces calculs à une entité extérieure C, non nécessairement de confiance, sans diminuer la conviction que le vérificateur retire de l'étape de vérification. Plus précisément, il consiste à décomposer la tâche de vérification en au moins deux étapes (6,15) et (8,17), de façon telle qu'au moins l'étape (6,15) puisse être exécutée par l'entité extérieure C. Le procédé s'applique en particulier au schéma de signature électronique RSA (Rivest, Shamir, Adleman) et à certains protocoles d'authentification de message basés sur le logarithme discret.

## Revendications

1. Procédé pour effectuer une tâche cryptographique au moyen d'une clé publique sur au moins une donnée numérique échangée entre une première entité (A) dotée d'une clé privée (s) et une deuxième entité (B), **caractérisé en ce que** celui-ci consiste à décomposer ladite tâche cryptographique en au moins deux étapes exécutées par des entités distinctes:

   - une première étape (6, 15) exécutée par une entité intermédiaire (C) qui consiste à soumettre ladite donnée numérique à un traitement numérique ouvert au moyen de tout ou partie de ladite clé publique pour obtenir une image partielle de ladite donnée numérique;
   - une deuxième étape (8, 17) exécutée par la deuxième entité (B) qui consiste à soumettre ladite image partielle à un traitement numérique public au moyen de tout ou partie de ladite clé publique, de façon à compléter ladite tâche cryptographique sur ladite donnée numérique.

2. Procédé pour effectuer une tâche cryptographique selon la revendication 1, **caractérisé en ce que** l'entité intermédiaire (C) réside dans un équipement physique distinct d'un équipement physique dans lequel réside la deuxième entité (B).

3. Procédé pour effectuer une tâche cryptographique selon la revendication 1 ou 2, **caractérisé en ce que** l'entité intermédiaire (C) réside dans un équipement physique dans lequel réside la première entité (A).

4. Procédé pour effectuer une tâche cryptographique selon l'une des revendications précédentes, **caractérisé en ce que** ladite tâche cryptographique consiste en une identification de la première entité (A) par la deuxième entité (B), au moyen d'un premier nombre entier (x) envoyé à la deuxième entité (B) par la première entité (A), ledit premier nombre entier (x) résultant d'un traitement numérique secret appliqué à un deuxième entier (r) dans la première entité (A), ladite donnée numérique étant un troisième nombre entier (y), obtenu à partir dudit deuxième nombre entier (r), de ladite clé privée (s) et d'un quatrième nombre entier (e) envoyé à la première entité (A) par la deuxième entité (B), et **en ce que**:

   - le traitement numérique ouvert consiste essentiellement à transformer ledit **troisième** nombre entier (y) en un cinquième nombre entier (y') au moyen de tout ou partie de la clé publique;
   - le traitement numérique public consiste essentiellement à transformer ledit cinquième nombre entier (y') au moyen de tout ou partie de ladite clé publique pour obtenir une valeur (y") permettant de conclure à une identification de la première entité (A) lorsque ladite valeur (y") est égale au dit premier nombre entier (x).

5. Procédé pour effectuer une tâche cryptographique selon la revendication 4 lorsque la clé publique est un triplet de trois nombres entiers, constitué d'un module (n), d'une base (g) et d'un paramètre de sécurité (v), le traitement numérique secret consistant à élever la base (g) à une première puissance (r) modulo le module (n) de la clé publique puis à additionner le deuxième nombre entier (r) avec un produit de la clef privée (s) par le quatrième nombre entier (e) pour obtenir le troisième nombre entier (y), **caractérisé en ce que**:

   - un quotient entier (a) du troisième nombre entier (y) divisé par un sixième nombre entier (b) strictement supérieur à l'unité, est utilisé dans le traitement numérique ouvert pour élever la base (g) à une deuxième puissance (a) modulo le module (n);
   - le sixième nombre entier (b), est utilisé dans le traitement numérique public pour élever ledit cinquième nombre entier (y') à une troisième puissance (b).

6. Procédé pour effectuer une tâche cryptographique selon l'une des revendications 1 à 3, **caractérisé en ce que** ladite tâche cryptographique consiste en une vérification de signature électronique, ladite donnée numérique étant une signature (z) résultant d'un traitement numérique secret appliqué à un nombre (m*) dans la première entité (A) au moyen de ladite clé privée (s), et **en ce que**:

   - le traitement numérique ouvert consiste essentiellement à transformer ladite signature (z) en une image partielle de signature (z') au moyen d'une première partie de ladite clé publique;
   - le traitement numérique public consiste essentiellement à transformer ladite image partielle de signature (z') au moyen d'une deuxième partie de ladite clé publique pour obtenir une valeur (z") qui permet de **conclure** à une signature valide lorsque ladite valeur (z") est égale au dit nombre (m*).

7. Procédé pour effectuer une tâche cryptographique selon la revendication 6 lorsque la clé publique est un couple (n, v) d'un premier (n) et d'un deuxième (v) nombres entiers, le traitement numérique secret consistant à élever le nombre (m*) à une première puissance (s) modulo ledit premier nombre entier (n) de la clé publique, **caractérisé en ce que**:

   - un troisième nombre entier (a) strictement supérieur à l'unité et strictement inférieur au deuxième nombre entier (v) de la clé publique, est utilisé dans le traitement numérique ouvert pour élever ladite signature (z) à une deuxième puissance (a) modulo le premier nombre entier (n);
   - un quatrième nombre entier (b) égal au quotient d'une division euclidienne du deuxième nombre entier (v) par le troisième nombre entier (a), est utilisé dans le traitement numérique public pour élever ladite image partielle de signature (z') à une troisième puissance (b) modulo le premier nombre entier (n).

8. Procédé pour effectuer une tâche cryptographique selon l'une des revendications 1 à 3, **caractérisé en ce que** ladite tâche cryptographique consiste en une authentification par la deuxième entité (B), d'un message (M) émis par la première entité (A), au moyen d'un premier nombre entier (m) envoyé à la deuxième entité (B) par la première entité (A), ledit premier nombre entier (m) étant obtenu en soumettant à une fonction de hachage (H) un deuxième nombre entier (x) en combinaison avec le message (M), ledit deuxième nombre entier (x) résultant d'un traitement numérique secret appliqué à un troisième nombre entier (r) dans la première entité (A), ladite donnée numérique étant un quatrième nombre entier (y) obtenu à partir dudit troisième nombre entier (r), de ladite clé privée (s) et d'un cinquième nombre entier (e) envoyé à la première entité (A) par la deuxième entité (B), et **en ce que**:

   - le traitement numérique ouvert consiste essentiellement à transformer ledit quatrième nombre entier (y) en un sixième nombre entier (y') au moyen de tout ou partie de la clé publique;
   - le traitement numérique public consiste essentiellement à transformer ledit sixième nombre entier (y') au moyen de tout ou partie de ladite clé publique pour obtenir une première valeur (y") qui, soumise à la fonction (H) de hachage en combinaison avec le message (M), donne une deuxième valeur (x') permettant de conclure à une authentification de message valable lorsque ladite deuxième valeur (x') est égale au dit premier nombre entier (m).

9. Procédé pour effectuer une tâche cryptographique selon la revendication 8 lorsque la clé publique est un triplet de trois nombres entiers, constitué d'un module (n), d'une base (g) et d'un paramètre de sécurité (v), le traitement numérique secret consistant à élever la base (g) à une première puissance (r) modulo le module (n) de la clé publique puis à additionner le premier nombre entier (r) avec un produit de ladite clé privée (s) par le cinquième nombre entier (e) pour obtenir le quatrième nombre entier (y), **caractérisé en ce que**:

- un quotient entier (a) du quatrième nombre entier (y) divisé par un septième nombre entier (b) strictement supérieur à l'unité, est utilisé dans le traitement numérique ouvert pour élever la base (g) à une deuxième puissance (a) modulo le module (n);
- le septième nombre entier (b), est utilisé dans le traitement numérique public pour élever ledit sixième nombre entier (y') à une troisième puissance (b).

## Claims

1.  Method for carrying out a cryptographic task by means of a public key on at least one digital data item exchanged between a first entity (A) endowed with a private key (s) and a second entity (B), **characterized in that** this method consists in splitting said cryptographic task into at least two steps executed by distinct entities:

    - a first step (6, 15) executed by an intermediate entity (C) which consists in subjecting said digital data item to an open digital processing by means of all or part of said public key so as to obtain a partial image of said digital data item;
    - a second step (8, 17) executed by the second entity (B) which consists in subjecting said partial image to a public digital processing by means of all or part of said public key in such a way as to complete said cryptographic task on said digital data item.

2.  Method for carrying out a cryptographic task according to Claim 1, **characterized in that** the intermediate entity (C) resides in a physical appliance distinct from a physical appliance in which the second entity (B) resides.

3.  Method for carrying out a cryptographic task according to Claim 1 or 2, **characterized in that** the intermediate entity (C) resides in a physical appliance in which the first entity (A) resides.

4.  Method for carrying out a cryptographic task according to any one of the preceding claims, **characterized in that** said cryptographic task consists of an identification of the first entity (A) by the second entity (B), by means of a first integer (x) sent to the second entity (B) by the first entity (A), said first integer (x) resulting from a secret digital processing applied to a second integer (r) in the fist entity (A), said digital data item being a third integer (y), obtained from said second integer (r), from said private key (s) and from a fourth integer (e) that is sent to the first entity (A) by the second entity (B), and **in that**:

    - the open digital processing consists essentially in transforming said third integer (y) into a fifth integer (y') by means of all or part of the public key;
    - the public digital processing consists essentially in transforming said fifth integer (1y') by means of all or part of said public key so as to obtain a value (y'') which makes it possible to conclude in favour of an identification of the first entity (A) when said value (y'') is equal to said first integer (x).

5.  Method for carrying out a cryptographic task according to Claim 4 when the public key is a triple of three integers, consisting of a modulus (n), of a base (g) and of a security parameter (v), the secret digital processing consisting in raising the base (g) to a first power (r) modulo the modulus (n) of the public key then in adding the second integer (r) with a product of the private key (s) times the fourth integer (e) so as to obtain the third integer (y), **characterized in that**:

    - an integer quotient (a) of the third integer (y) divided by a sixth integer (b) strictly greater than unity, is used in the open digital processing to raise the base (g) to a second power (a) modulo the modulus (n) ;
    - the sixth integer (b), is used in the public digital processing to raise said fifth integer (y') to a third power (b).

6.  Method for carrying out a cryptographic task according to any one of Claims 1 to 3, **characterized in that** said cryptographic task consists of a verification of electronic signature, said digital data item being a signature (z) resulting from a secret digital processing applied to a number (m*) in the first entity (A) by means of said private key (s), and **in that**:

    - the open digital processing consists essentially in transforming said signature (z) into a signature partial image (z') by means of a first part of said public key;
    - the public digital processing consists essentially in transforming said signature partial image (z') by means of a second part of said public key so as to obtain a value (z'') which makes it possible to conclude in favour of a valid signature when said value (z'') is equal to said number (m*).

7. Method for carrying out a cryptographic task according to Claim 6 when the public key is a pair (n, v) of a first (n) and a second (v) integer, the secret digital processing consisting in raising the number (m*) to a first power (s) modulo said first integer (n) of the public key, **characterized in that**:

- a third integer (a) strictly greater than unity and strictly less than the second integer (v) of the public key, is used in the open digital processing to raise said signature (z) to a second power (a) modulo the first integer (n);
- a fourth integer (b) equal to the quotient of a Euclidean division of the second integer (v) by the third integer (a), is used in the public digital processing to raise said signature partial image (z') to a third power (b) modulo the first integer (n).

8. Method for carrying out a cryptographic task according to one of Claims 1 to 3, **characterized in that** said cryptographic task consists of an authentication by the second entity (B), of a message (M) transmitted by the first entity (A), by means of a first integer (m) sent to the second entity (B) by the first entity (A), said first integer (m) being obtained by subjecting a second integer (x) in combination with the message (M) to a hash function (H), said second integer (x) resulting from a secret digital processing applied to a third integer (r) in the first entity (A), said digital data item being a fourth integer (y) obtained from said third integer (r), from said private key (s) and from a fifth integer (e) sent to the first entity (A) by the second entity (B), and **in that**:

- the open digital processing consists essentially in transforming said fourth integer (y) into a sixth integer (y') by means of all or part of the public key;
- the public digital processing consists essentially in transforming said sixth integer (y') by means of all or part of the public key so as to obtain a first value (y'') which, subjected to the hash function (H) in combination with the message (M), gives a second value (x') which makes it possible to conclude in favour of a valid message authentication when said second value (x') is equal to said first integer (m).

9. Method for carrying out a cryptographic task according to Claim 8 when the public key is a triple of three integers, consisting of a modulus (n), of a base (g) and of a security parameter (v), the secret digital processing consisting in raising the base (g) to a first power (r) modulo the modulus (n) of the public key then in adding the first integer (r) with a product of said private key (s) times the fifth integer (e) so as to obtain the fourth integer (y), **characterized in that**:

- an integer quotient (a) of the fourth integer (y) divided by an seventh integer (b) strictly greater than unity, is used in the open digital processing to raise the base (g) to a second power (a) modulo the modulus (n) ;
- the seventh integer (b), is used in the public digital processing to raise said sixth integer (y') to a third power (b).

**Patentansprüche**

1. Verfahren zur Durchführung einer kryptographischen Aufgabe mittels eines öffentlichen Schlüssels an mindestens einem digitalen Datenwert, der zwischen einer ersten Entität (A), die mit einem privaten Schlüssel (s) versehen ist, und einer zweiten Entität (B) ausgetauscht wird, **dadurch gekennzeichnet, dass** es darin besteht, die kryptographische Aufgabe in mindestens zwei Schritte zu zerlegen, die von unterschiedlichen Entitäten ausgeführt werden:

- ein von einer Zwischen-Entität (C) ausgeführter erster Schritt (6, 15), der darin besteht, den digitalen Datenwert mittels des ganzen oder eines Teils des öffentlichen Schlüssels einer offenen digitalen Verarbeitung zu unterziehen, um ein Teilbild des digitalen Datenwerts zu erhalten;
- ein von der zweiten Entität (B) ausgeführter zweiter Schritt (8, 17), der darin besteht, das Teilbild mittels des ganzen oder eines Teils des öffentlichen Schlüssels einer öffentlichen digitalen Verarbeitung zu unterziehen, um die kryptographische Aufgabe am digitalen Datenwert zu vervollständigen.

2. Verfahren zur Durchführung einer kryptographischen Aufgabe nach Anspruch 1, **dadurch gekennzeichnet, dass** die Zwischen-Entität (C) sich in einer physikalischen Ausrüstung befindet, die sich von einer physikalischen Ausrüstung unterscheidet, in der sich die zweite Entität (B) befindet.

3. Verfahren zur Durchführung einer kryptographischen Aufgabe nach Anspruch 1 oder 2, **dadurch gekennzeichnet, dass** die Zwischen-Entität (C) sich in einer physikalischen Ausrüstung befindet, in der sich die erste Entität (A) befindet.

4. Verfahren zur Durchführung einer kryptographischen Aufgabe nach einem der vorhergehenden Ansprüche, **dadurch gekennzeichnet, dass** die kryptographische Aufgabe aus einer Identifizierung der ersten Entität (A) durch die zweite Entität (B) mittels einer ersten ganzen Zahl (x) besteht, die von der ersten Entität (A) an die zweite Entität (B) gesendet wird, wobei die erste ganze Zahl (x) aus einer geheimen digitalen Verarbeitung resultiert, die an eine zweite ganze Zahl (r) in der ersten Entität (A) angewendet wird, wobei der digitale Datenwert eine dritte ganze Zahl (y) ist, die ausgehend von der zweiten ganzen Zahl (r), dem privaten Schlüssel (s) und einer vierten ganzen Zahl (e) erhalten wird, die von der zweiten Entität (B) an die erste Entität (A) gesendet wird, und dass:

- die offene digitale Verarbeitung hauptsächlich darin besteht, die dritte ganze Zahl (y) mittels des ganzen oder eines Teils des öffentlichen Schlüssels in eine fünfte ganze Zahl (y') umzuwandeln;
- die öffentliche digitale Verarbeitung hauptsächlich darin besteht, die fünfte ganze Zahl (y') mittels des ganzen oder eines Teils des öffentlichen Schlüssels umzuwandeln, um einen Wert (y") zu erhalten, der es ermöglicht, auf eine Identifizierung der ersten Entität (A) zu schließen, wenn der Wert (y") gleich der ersten ganzen Zahl (x) ist.

5. Verfahren zur Durchführung einer kryptographischen Aufgabe nach Anspruch 4, wenn der öffentliche Schlüssel ein Triplett aus drei ganzen Zahlen ist, bestehend aus einem Modul (n), einer Basis (g) und einem Sicherheitsparameter (v), wobei die geheime digitale Verarbeitung darin besteht, die Basis (g) auf eine erste Potenz (r) Modulo das Modul (n) des öffentlichen Schlüssel zu erheben und dann die zweite ganze Zahl (r) mit einem Produkt aus dem privaten Schlüssel (s) und der vierten ganzen Zahl (e) zu addieren, um die dritte ganze Zahl (y) zu erhalten, **dadurch gekennzeichnet, dass**:

- ein ganzzahliger Quotient (a) der dritten ganzen Zahl (y) dividiert durch eine sechste ganze Zahl (b) strikt größer als der Einheitswert in der offenen digitalen Verarbeitung verwendet wird, um die Basis (g) auf eine zweite Potenz (a) Modulo das Modul (n) zu erheben;
- die sechste ganze Zahl (b) in der öffentlichen digitalen Verarbeitung verwendet wird, um die fünfte ganze Zahl (y') auf eine dritte Potenz (b) zu erheben.

6. Verfahren zur Durchführung einer kryptographischen Aufgabe nach einem der Ansprüche 1 bis 3, **dadurch gekennzeichnet, dass** die kryptographische Aufgabe aus einer Überprüfung einer elektronischen Signatur besteht, wobei der digitale Datenwert eine Signatur (z) ist, die aus einer geheimen digitalen Verarbeitung resultiert, die an eine Zahl (m*) in der ersten Entität (A) mittels des privaten Schlüssels (s) angewendet wird, und dass:

- die offene digitale Verarbeitung hauptsächlich darin besteht, die Signatur (z) mittels eines ersten Teils des öffentlichen Schlüssels in ein Signatur-Teilbild (z') umzuwandeln;
- die öffentliche digitale Verarbeitung hauptsächlich darin besteht, das Teil-Signaturbild (z') mittels eines zweiten Teils des öffentlichen Schlüssels umzuwandeln, um einen Wert (z") zu erhalten, der es ermöglicht, auf eine gültige Signatur zu schließen, wenn der Wert (z") gleich der Zahl (m*) ist.

7. Verfahren zur Durchführung einer kryptographischen Aufgabe nach Anspruch 6, wenn der öffentliche Schlüssel ein Paar (n, v) aus einer ersten (n) und einer zweiten (v) ganzen Zahl ist, wobei die geheime digitale Verarbeitung darin besteht, die Zahl (m*) auf eine erste Potenz (s) Modulo die erste ganze Zahl (n) des öffentlichen Schlüssels zu erheben, **dadurch gekennzeichnet, dass**:

- eine dritte ganze Zahl (a) strikt größer als der Einheitswert und strikt kleiner als die zweite ganze Zahl (v) des öffentlichen Schlüssels in der offenen digitalen Verarbeitung verwendet wird, um die Signatur (z) auf eine zweite Potenz (a) Modulo die erste ganze Zahl (n) zu erheben;
- eine vierte ganze Zahl (b) gleich dem Quotient einer euklidischen Division der zweiten ganzen Zahl (v) durch die dritte ganze Zahl (a) in der öffentlichen digitalen Verarbeitung verwendet wird, um das Teil-Signaturbild (z') auf eine dritte Potenz (b) Modulo die erste ganze Zahl (n) zu erheben.

8. Verfahren zur Durchführung einer kryptographischen Aufgabe nach einem der Ansprüche 1 bis 3, **dadurch gekennzeichnet, dass** die kryptographische Aufgabe aus einer Authentifizierung einer Mitteilung (M), die von der ersten Entität (A) gesendet wird, durch die zweite Entität (B) mittels einer ersten ganzen Zahl (m), die von der ersten Entität (A) an die zweite Entität (B) gesendet wird, besteht, wobei die erste ganze Zahl (m) erhalten wird, indem eine zweite ganze Zahl (x) in Kombination mit der Mitteilung (M) einer Zerhackerfunktion (H) unterzogen wird, wobei die zweite ganze Zahl (x) aus einer geheimen digitalen Verarbeitung resultiert, die an eine dritte ganze Zahl (r) in der ersten Entität (A) angewendet wird, wobei der digitale Datenwert eine vierte ganze Zahl (y) ist, die ausgehend von der dritten ganzen Zahl (r), dem privaten Schlüssel (s) und einer fünften ganzen Zahl (e) erhalten wird, die von der zweiten Entität (B) an die erste Entität (A) gesendet wird, und dass:

- die offene digitale Verarbeitung hauptsächlich darin besteht, die vierte ganze Zahl (y) mittels des ganzen oder eines Teils des öffentlichen Schlüssels in eine sechste ganze Zahl (y') umzuwandeln;
- die öffentliche digitale Verarbeitung hauptsächlich darin besteht, die sechste ganze Zahl (y') mittels des ganzen oder eines Teils des öffentlichen Schlüssels umzuwandeln, um einen ersten Wert (y'') zu erhalten, der, wenn er in Kombination mit der Mitteilung (M) der Zerhackerfunktion (H) unterzogen wird, einen zweiten Wert (x') ergibt, der es ermöglicht, auf eine gültige Mitteilungs-Authentifizierung zu schließen, wenn der zweite Wert (x') gleich der ersten ganzen Zahl (m) ist.

9. Verfahren zur Durchführung einer kryptographischen Aufgabe nach Anspruch 8, wenn der öffentliche Schlüssel ein Triplett aus drei ganzen Zahlen ist, bestehend aus einem Modul (n), einer Basis (g) und einem Sicherheitsparameter (v), wobei die geheime digitale Verarbeitung darin besteht, die Basis (g) auf eine erste Potenz (r) Modulo das Modul (n) des öffentlichen Schlüssels zu erheben und dann die erste ganze Zahl (r) mit einem Produkt aus dem privaten Schlüssel (s) und der fünften ganzen Zahl (e) zu addieren, um die vierte ganze Zahl (y) zu erhalten, **dadurch gekennzeichnet, dass**:

- ein ganzzahliger Quotient (a) der vierten ganzen Zahl (y) dividiert durch eine siebte ganze Zahl (b) strikt größer als der Einheitswert in der offenen digitalen Verarbeitung verwendet wird, um die Basis (g) auf eine zweite Potenz (a) Modulo das Modul (n) erheben;
- die siebte ganze Zahl (b) in der öffentlichen digitalen Verarbeitung verwendet wird, um die sechste ganze Zahl (y') auf eine dritte Potenz (b) zu erheben.

**Fig.1**

A      4   C        B

$$a \cdot b + c := v$$

1

$$m^* := H(m)$$
$$z := (m^*)^s \ (\text{modulo } n)$$
$$m \rightarrow$$
$$z \rightarrow$$

2

$$m, z$$

3

$$m^* := H(m)$$

5

$$z$$

$$z' := (z)^a \ (\text{modulo } n)$$
$$z' \rightarrow$$
$$b \rightarrow$$
$$c \rightarrow$$

6

7

$$z', b, c$$

8

$$z'' := (z')^b \cdot (z)^c \ (\text{modulo } n)$$
$$z'' =? \ m^*$$

**Fig.2**

A          C          B

9

$$r \gg s$$
$$x := g^r \ (\mathrm{mod} \ n)$$
$$x \rightarrow$$

10

x

12

e

11

$$[0, u-1] \rightarrow e$$
$$e \rightarrow$$

$$y := r + s \cdot e$$
$$a \cdot b + c := y$$
$$a \rightarrow$$
$$b \rightarrow$$
$$c \rightarrow$$

13

14

a

$$y' := g^a \ (\mathrm{mod} \ n)$$
$$y' \rightarrow$$

15

16

b, c, y'

17

$$y'' := y'^b \cdot g^c \cdot v^e \ (\mathrm{mod} \ n)$$
$$y'' = ? \ x$$

**Fig.3**

**Fig.4**

A → [9]
$$r >> s$$
$$x := g^r \ (\text{mod } n)$$
$$x \rightarrow$$

[12] → e

[13]
$$y := r + s \cdot e$$
$$a \cdot b + c := y$$
$$b \rightarrow$$
$$c \rightarrow$$

[15]
$$y' := g^a \ (\text{mod } n)$$
$$y' \rightarrow$$

B

[10] → x

[11]
$$[0, u-1] \rightarrow e$$
$$e \rightarrow$$

[16] → b, c, y'

[17]
$$y'' := y'^b \cdot g^c \cdot v^e \ (\text{mod } n)$$
$$y'' =? \ x$$

**Fig.5**

**EP 1 407 575 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2716058

- FR 2752122

**Littérature non-brevet citée dans la description**

- **KAWAMURA S.I. et al.** Fast served-aided secret computation protocols for modular exponentiation. *IEEE Journal on selected areas in communications,* 01 Juin 1993, vol. 11 (5), 778-784

- **RIVEST ; SHAMIR ; ADLEMAN.** A method for obtaining digital signatures and public-key cryptosystems. *CACM,* Février 1978, vol. 21 (2), 120-126